# EUROPEAN PATENT APPLICATION

(11) **EP 1 954 048 A2**
(43) Date of publication of application: **06.08.2008**
(21) Application number: 06811274.7
(22) Date of filing: 05.10.2006
(51) Int. Cl.: H04N 7/173, G06F 13/00

(54) **VIEWING/HEARING DEVICE**

(30) Priority: 11.10.2005 JP 2005296599
(71) Applicant: Sharp Kabushiki Kaisha, Osaka-shi, Osaka 545-8522 (JP)
(72) Inventor: HAYASHI, Hiroyuki, Chiba 262-0021 (JP)
(74) Representative: Müller - Hoffmann & Partner
(86) International application number: PCT/JP2006/319936
(87) International publication number: WO 2007/043427

(57) **Abstract**

First, in step S0, a process is started. In step S1, a content is transmitted from a stationary TV 200 to a mobile terminal 100. If there is a part desired to be viewed/listened to on the stationary TV 200 (YES) in step S2 while the content on the mobile terminal 100 is views and listened to, the process proceeds to step S3 where a start position and an end position of a period desired to be viewed/listened to are inputted. In step S4, the viewing/listening period information is stored in a recording unit. In step S5, the viewing/listening period information is transmitted to the stationary TV. In step S6, the content is reproduced on the stationary TV according to the viewing/listening period information, and the process is terminated (steps S7). In this way, when viewing/listening to a content on the mobile terminal and viewing/listening to a particular part of the content again on the stationary TV, a user is made free from complicated operations such as selection of a content or fast forward.

## Description

### Technical Field

The present invention relates to audio visual devices for viewing/listening to moving images/music and a method thereof. More particularly, the present invention relates to audio visual devices and a method thereof for enabling the viewing/listening of a certain period of a content on one of a first audio visual device such as a mobile terminal and a second audio visual device such as a stationary TV at home, the certain period specified by the other one of these audio visual devices.

### Background Art

Heretofore, the technique of cooperation between a mobile terminal and a stationary TV has been described, for example, in Patent Document 1. This document explains that viewing/listening information for continuation is transmitted either from a mobile terminal to a stationary TV or from the stationary TV to the mobile terminal to allow a user to view/listen to the rest of a content, which the user has previously viewed/listened to on one of the terminals, on the other terminal.
[Patent Document1] Japanese Patent Application Publication No. 2004-48132, "audio visual device and viewing/listening method"

### Disclosure of the Invention

### Problems to be Solved by the Invention

In the technique of Patent Document1 , the user is capable of viewing/listening to the rest of the content, which the user has previously viewed/listened to, on the other terminal. However, when a user views/listens to a content on, for example, a mobile terminal and wants to view/listen to this part of the content on a stationary TV after returning home, the user has to perform a fast forward/fast rewind operation by himself or herself. Moreover, a user cannot view/listen to the rest of a content that is held in a mobile terminal but is not held in a stationary TV.

The present invention aims to enhance the flexibility to view/listen to a certain period of a content on one of audio visual devices, the certain period specified by the other one of the audio visual devices.

### Means for Solving the Problems

According to an aspect of the present invention, provided is an audio visual device characterized by including: a content outputting unit for outputting a content; an inputting unit; and a viewing/listening period information transmitting unit for outputting, to a different audio visual device, viewing/listening period information on a viewing/listening period of the content inputted by the inputting unit. The different audio visual device receives the viewing/listening period information that is transmitted from the audio visual device, and thus allows a user to view/listen to a content of only a period, which is specified by the user as the period that the user wants to view/listen to again, on the different audio visual device.

In addition, provided is an audio visual device characterized by including: a content outputting unit for outputting a content; a viewing/listening period information receiving unit for receiving viewing/listening period information transmitted from a different audio visual device; and a controller for performing a control to output the content for only the period specified by the received viewing/listening period information. This audio visual device receives the viewing/listening period information that is transmitted from the different audio visual device, and thus allows a user to view/listen to a content of only a period, which is specified by the user as the period that the user wants to view/listen to again, on the audio visual device.

The audio visual device of the present invention has a function of communicating with another audio visual device. Thereby, when the content, which is specified by content information included in the viewing/listening period information, does not exist in the audio visual device, the audio visual device is capable of requesting a transfer of the content from an audio visual device from which the viewing/listening period information has been transmitted. When the content, which is specified by the received viewing/listening period information, is not recorded in the audio visual device, the audio visual device automatically retrieves the content, reproduces the retrieved content, and thus enables the viewing/listening of the content that does not exist in the audio visual device.

### Effects of the Invention

According to the present invention, it is possible to enhance the flexibility of a process for viewing/listening to the same content on multiple devices.

### Brief Description of the Drawings

[Fig. 1] Fig. 1 is a functional block diagram showing a configuration example of an audio visual device (such as a mobile terminal and a stationary TV) according to a first embodiment of the present invention.
[Fig. 2] Fig. 2 is a configuration example of the audio visual device (such as the stationary TV) according to a third embodiment of the present invention.
[Fig. 3] Fig. 3 is a diagram showing a configuration in which a recording device is connected to a network at home, in addition to the stationary TV in Fig. 2.
[Fig. 4] Fig. 4 is a diagram showing a configuration example of a fourth embodiment of the present invention in a case where the network connector in Fig. 2 has a function of connection to a network at home as well as to the Internet.
[Fig. 5] Fig. 5 is a diagram showing a configuration example of viewing/listening period information
[Fig. 6] Fig. 6 is a diagram showing a configuration of a fifth embodiment of the present invention, that is, a configuration in which an audio visual device is connected to a network at home and connected to the Internet via a router.
[Fig. 7] Fig. 7 is a flowchart showing a process flow according to the first embodiment of the present invention.
[Fig. 8] Fig. 8 is a flowchart showing a process flow according to the second embodiment of the present invention.
[Fig. 9] Fig. 9 is a flowchart showing a process flow according to the fourth embodiment of the present invention.

### Description of Symbols

- 100: mobile terminal
- 200: stationary TV
- 250: stationary TV at another home
- 300: home network
- 350: Internet
- 400: content recording device
- 500: router
- 600: content server
- 700: viewing/listening period information file

### Best Modes for Carrying Out the Invention

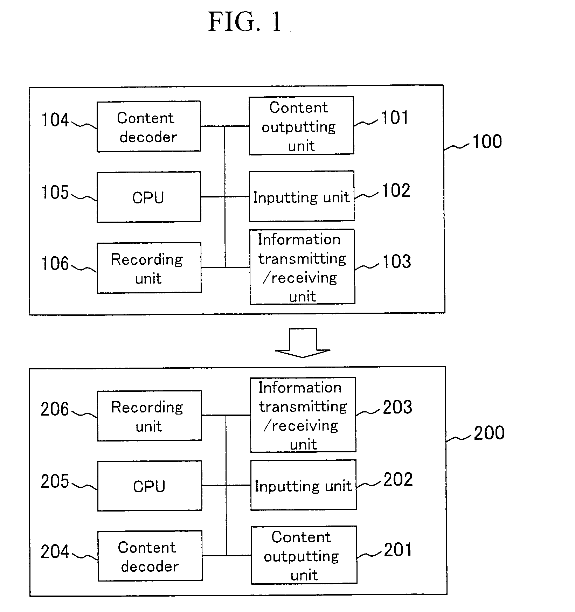

A configuration of a first embodiment of the present invention will be described in detail hereinbelow with reference to the drawings. Fig. 1 is a functional block diagram showing configuration examples of audio visual devices (such as a mobile terminal and a stationary TV) according to a first embodiment of the present invention. As shown in Fig. 1, by using the audio visual devices of the first embodiment, a user can: go out with a mobile terminal 100; specify a part of a content to be watched again at home while watching the content outside the home; and watch the part of the content specified from outside the home, on a stationary TV 200 after returning home.

In this case, the same content is recorded in each of recording units 106 and 206 in the mobile terminal 100 and the stationary TV 200, respectively. Note that a kind of codec, a bit rate, a screen size, which are used to create the content recorded in each of the recording units 106 and 206, may differ as long as the recorded information is the same. A content to be targeted is a content such as a television program recorded by the stationary TV 200. By means of an information transmitting/receiving unit 203 of the stationary TV 200 and an information transmitting/receiving unit 103 of the mobile terminal 100, the content is transmitted from the stationary TV 200 to the mobile terminal 100. The content can be transmitted/received between the information transmitting/receiving units 103 and 203 by using a cable connection such as USB or IEEE1394 or a wireless connection such as IrDA, Bluetooth or IEEE802.11 series. In addition, the content can be transferred from the stationary TV 200 to the mobile terminal 100, through record media (medium) such as a Compact Flash card (registered trademark) and a SD card (registered trademark). At this time, the content may be transferred to the mobile terminal 100, after the content is re-encoded in the stationary TV 200 to be suitable for the performance of the mobile terminal 100.

The present embodiment will be more specifically described hereinbelow.

### Embodiment

### <Embodiment 1>

A user goes out with a mobile terminal 100, and watches a content. The content is recorded in a recording unit 106, and is generally encoded to reduce its data size. For this reason, when the user issues an instruction to reproduce the content by operating an inputting unit 102 to reproduce the content, a CPU 105 controls the recording unit 106 and a content decoder 104 to decode the encoded content, and then outputs the content from a content outputting unit 101.

Since the mobile terminal 100 is a portability-oriented terminal, the mobile terminal 100 generally has a small display for display and also a speaker having poor acoustic characteristics, as compared to a stationary TV 200. For this reason, watching the content on the mobile terminal 100 provides poorer realistic sensation or the like than the stationary TV 200. Accordingly, it is natural that a user want to watch a specific period of the content again on the stationary TV 200, while watching the content on the mobile terminal. Heretofore, a technique has not been sufficiently developed which enables the mobile terminal 100 and the stationary TV 200 to share a part desired to be watched again. For this reason, the user has selected the content to be watched again, and performed fast forward/fast rewind operations by operating an inputting unit 202 of the stationary TV 200. These operations are so complicated and it is so difficult for the user himself or herself to remember all the periods that the user wanted to watch that the user has sometimes missed some periods of the content to be watched.

In this embodiment, if the user finds a part of a content desired to be watched again on the stationary TV200 while watching the content on the mobile terminal 100, the user inputs, through the inputting unit 202, a start position and an end position of the period desired to be viewed/listened to again. For an input operation of a period, there may be prepared: a position specification button, with which the user can specify the start/end positions during viewing/listening to the content; a numeric keypad or the like allowing the user to input start/end times while the time from the start of the content is displayed on the content display screen. When a period to be viewed/listened to again is inputted, the CPU 105 records the input, as viewing/listening period information, to the recording unit 106. In addition to the configuration of Fig. 1, a memory for temporary storage may be provided to record the viewing/listening period information therein.

The mobile terminal 100 transmits the viewing/listening period information to a different audio visual device, by using an information transmitting/receiving device 103, so that the user can again view/listen to the specified period on the different audio visual device. Note that, although the viewing/listening period information may be described in any format specific to a terminal manufacturer, the viewing/listening period information is preferably described with an XML format or the like, which is commonly usable, because the information is assumed to be exchanged between various devices.

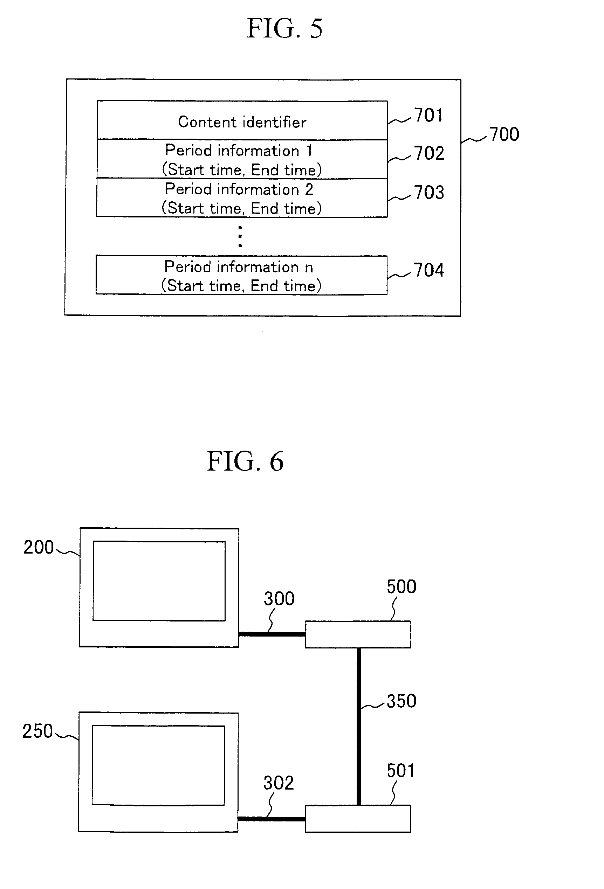

Subsequently, the viewing/listening period information will be described. A conceivable example as the viewing/listening period information is a data structure shown in Fig. 5. A file 700 for storing the viewing/listening period information stores period information 702, 703 and 704 indicating information on multiple viewing/listening periods specified by the user. The period information stores both of a start time of viewing/listening to and an end time thereof. In addition, the file 700 for storing the viewing/listening period information also stores a content identifier.701 for identifying a content to be viewed/listened to. The content identifier 701 stores the file name of a content to be viewed/listened to.

Note that the file name of a content to be viewed/listened to may not be stored as the content identifier 701 inside the file, but may be used as the file name of the file 700 for storing the viewing/listening period information. In other words, the file 700 for storing the viewing/listening period information may be given the same file name as a content or the same file name having only its extension changed, so that the content to be viewed/listened to can be identified.

Moreover, the period information 704 does not necessarily stores both of the start time and the end time for the period. When the period information 704 only stores the start time, it means that a part of the content after the start time is to be viewed/listened to. Accordingly, by setting, as the start time, an end time when the user has finished viewing/listening to the content, the user can view/listen to, on the stationary TV 200, the rest of the content that the user has viewed/listened to on the mobile terminal 100. After returning home, the user operates the inputting unit 102 of the mobile terminal 100 to transmit the viewing/listening period information to the mobile terminal 100, so as to view/listen to the content again. At this time, the viewing/listening period information is transmitted from the recording unit 106 to the information transmitting/receiving unit 103 under control of the CPU 105 of the mobile terminal 100. The viewing/listening period information outputted from the information transmitting/receiving unit 103 is received by the information transmitting/receiving unit 203 of the stationary TV 200. Upon receipt of the viewing/listening period information, a CPU 205 reads the content identifier included in viewing/listening period information, and reproduces its corresponding content stored in the recording unit 206. When the content is encoded, a content decoder 204 is controlled to decode the content. At this time, the CPU 205 reads the period of the content desired to be viewed/listened to, and outputs the period of the content, specified by the user, from a content outputting unit 201 while controlling a recording unit 206 and, if necessary, the content decoder 204.

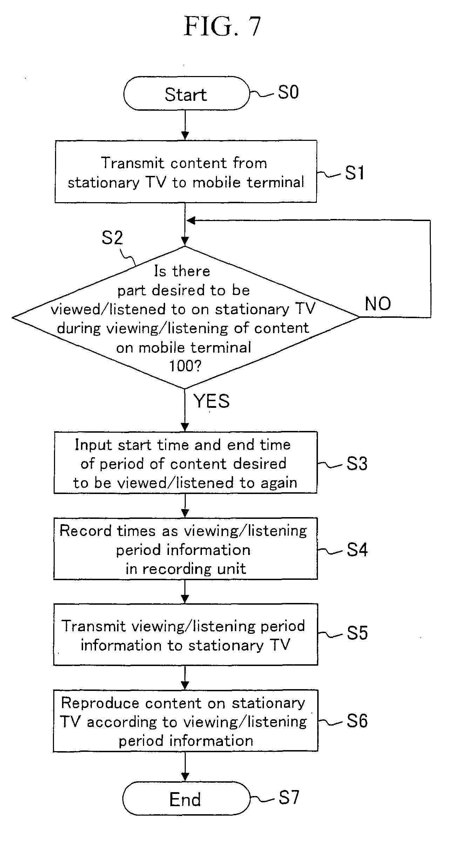

An operation flow is described with reference to Fig. 7.
First, a process starts in step S0. In step S1, a content is transmitted from the stationary TV 200 to the mobile terminal 100. When the user encounters a part of the content desired to be viewed/listened to again on the stationary TV 200 in step S2 (YES) while viewing/listening to the content on the mobile terminal 100, the process proceeds to step S3. Then, the user inputs the start time and the end time of the period of the content desired to be viewed/listened to again. In step S4, this viewing/listening period information is recorded in the recording unit 206. In step S5, the viewing/listening period information is transmitted to the stationary TV 200. In step S6, the content is reproduced on the stationary TV 200 according to the viewing/listening period information. Thereafter, the process is terminated (step S7).

Note that, when a user specifies multiple periods of a content on the mobile terminal 100, the content outputting unit 201 may output multiple choices such as text characters, thumbnail images or the like prior to the reproduction of the content, thereby causing the user to choose one of the parts of the content through an inputting unit 202. Alternatively, the multiple periods may be merely outputted sequentially.

### <Embodiment 2>

Next, a technique according to a second embodiment of the present invention will be described. Upon the same assumption of the first embodiment, there is a case where a content specified by the viewing/listening period information does not exist in the recording unit 206 of the stationary TV 200 when the viewing/listening period information is transmitted from the stationary TV 200 to the mobile terminal 100. For example, a possible case is that: a family member of the user operates the inputting unit 202 to erase the concerned content while the user is away from home; or the content is not transferred from the stationary TV 200 to the mobile terminal 100, but is downloaded by the mobile terminal 100 through a network such as a wireless LAN.

In such a case, through the information transmitting unit 203, the stationary TV 200 requests the mobile terminal 100 to transfer the content When the mobile terminal 100 receives the transfer request of the content through the information transmitting/receiving unit 103, the CPU reads the content information from the recording unit 106 to check whether or not the content is transferable, and transfers the content, if transferable, from the recording unit 106 to the information transmitting/receiving unit 103. The content transferred to the information transmitting/receiving unit 103 is transmitted to the stationary TV 200. In the stationary TV 200, the content received through the information transmitting/receiving unit 203 is temporarily recorded in the recording unit 206. After the entire content is recorded, the stationary TV 200 starts reproduction of the specified period and outputs the period from the content outputting unit 201 according to the viewing/listening period information received in advance.

Note that, in the above example, the entire content is transferred from the mobile terminal 100 to the stationary TV 200 to reproduce only the specified period of the content. However, the mobile terminal 100 may transfer only the specified period of the content according to the viewing/listening period information, and thus the stationary TV 200 may output the specified period.

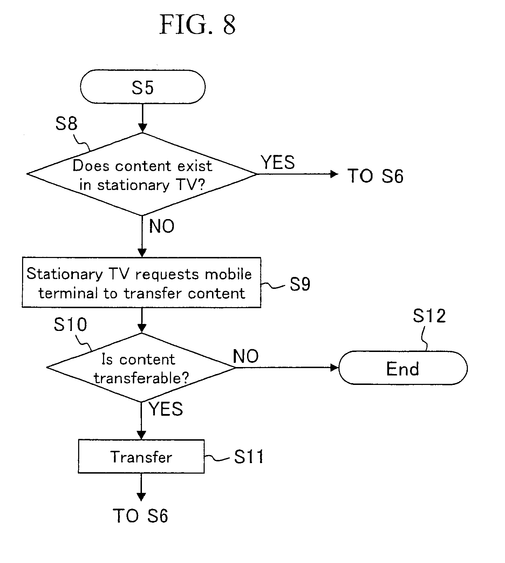

As shown in Fig. 8, in step S8, it is determined whether or not a content exists in the stationary TV 200, from the step 5 of Fig. 7. If the content exists in the stationary TV 200, a process proceeds to step S6, otherwise to step S9. In step S9, it is determined whether or not the content is transferable. If the content is not transferable (No), the process ends (step S12). If the content is transferable (Yes), the process proceeds to step S11 to transfer the content, and then proceeds to step S6.

### <Embodiment 3>

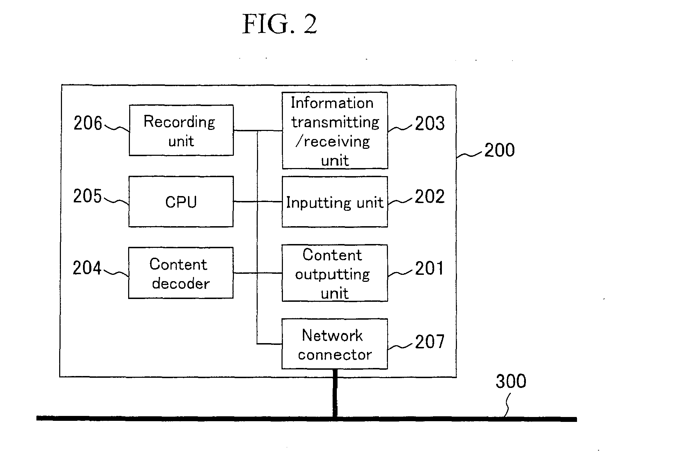

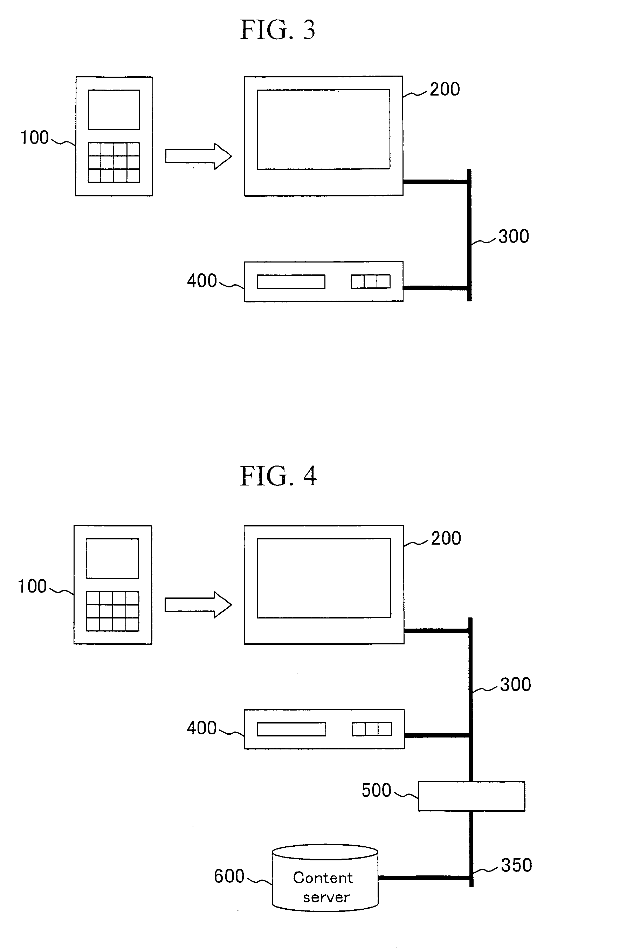

Next, a third embodiment of the present invention will be described. As shown in Fig. 2, in this embodiment, a stationary TV 200 has a network connector 207, and is connected to a home network 300. Here, as shown in Fig. 3, in addition to the stationary TV 200, a content recording device 400 is connected to the home network 300. In a case where the stationary TV 200, when receiving viewing/listening period information from a mobile terminal 100, does not have its corresponding content in a recording unit 206, the stationary TV 200 searches a recording device on the home network 300. When the content recording device 400 is found as a result of the search, the stationary TV 200 searches the content recording device 400 for the corresponding content. The stationary TV 200 may search for a content by receiving a list of contents recorded in the content recording device 400, from the content recording device 400. Alternatively, the stationary TV 200 may transmit information on a content to the content recording device 400, and then the content recording device 400 may search for the content.

When the corresponding content is found, the corresponding content is transferred from the content recording device 400 to the stationary TV 200 through the home network 300. The transferred content is temporarily recorded in the recording unit 206. After the entire content is recorded, the stationary TV 200 starts reproduction of the specified period and outputs the period from the content outputting unit 201 according to the viewing/listening period information received in advance.

The above embodiment describes the example in which the entire content is transferred from the content recording device 400 to the stationary TV 200 to reproduce only the specified period. However, the viewing/listening period information may be transmitted from the stationary TV 200 to the content recording device 400 through the home network 300; and the specified period of the content may be only transferred by the content recording device 400 according to the viewing/listening period information and thus outputted by the stationary TV 200.

Note that an information transmitting/receiving device 203 and the network connector 207 are separately illustrated in Fig. 2, but may be configured as one transmitting/receiving unit including these two functions.

### <Embodiment 4>

This embodiment is a case where a network connector 207 has a function of connection to the Internet in addition to a home network, i.e., the network connector 207 is connected to the Internet 350 as shown in Fig. 4. As shown in the configuration of Fig. 4, a router 500 for routing data may be provided between a home network 300 and the Internet 350.

In a case where a stationary TV 200, when receiving viewing/listening period information from a mobile terminal 100, does not have its corresponding content in a recording unit 206, the stationary TV 200 searches a recording device on the home network 300. When the content recording device 400 is found as a result of the search, the stationary TV 200 searches the content recording device 400 for the corresponding content. The number of recording devices at home is not limited to one, and multiple recording devices may be provided. In the case where there are multiple recording devices, the search continues until the corresponding content is found or until it is verified that the corresponding content does not exist in all the recording devices.

When the corresponding content is not found in the devices at home, the stationary TV 200 searches the Internet for the corresponding content. A normal search engine available on the Internet may be used for the search, or a special search engine for content searching may be provided in some cases.

When a corresponding content is found, a content server 600 holding the corresponding content transfers the corresponding content to the stationary TV 200 through a home network 300. The transferred content is temporarily recorded in the recording unit 206. After the entire content is recorded, the stationary TV 200 starts reproduction of the specified period and outputs the specified period from the content outputting unit 201 according to the viewing/listening period information received in advance.

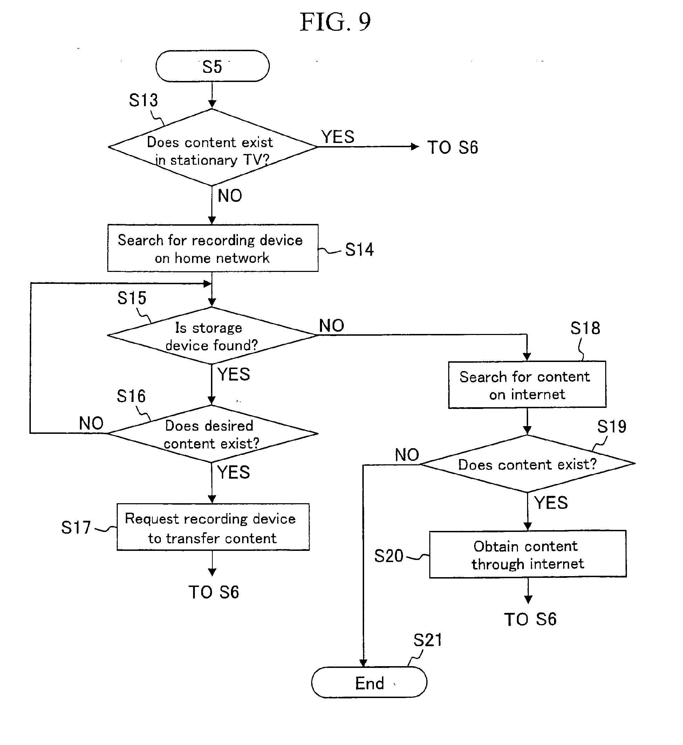

As shown in Fig. 9, the process proceeds from step S5 to step S13. Then, whether or not a content exists in the stationary TV 200 is determined. If Yes, the process proceeds to step S6. If No, the process proceeds to step S14, and the stationary TV 200 searches for a recording device on the home network. Subsequently, in step S 15, it is determined whether or not a storage device is found. If Yes, the process proceeds to step S16, and it is determined whether or not a desired content exists in the found recording device. If Yes, the process proceeds to step S 17. Then, the stationary TV 200 requests the recording device to transfer the content and the process proceeds to step S6.

If No, the process returns to step S 15, and the stationary TV 200 searches for another device. If No in step S 15, the process proceeds to step S 18. The content is searched for on the Internet, and it is determined whether or not the content exists in step S19. If the content exists (Yes), the content is viewed/listened to through the Internet in step S20, and the process returns to step S6. If the content does not exist (No), the process proceeds to step S21 and ends.

Note that, instead of a file name as described above, an ID specific to the content may be used as an identifier for identifying a content to be viewed/listened to. The content-specific ID is included in a file of the content itself as metadata, and is a unique number indicating the content. This ID does not change even when a file name is changed, and is also continuously used even when the content is re-encoded. For this reason, even for multiple files with different bit rates, different image sizes, or the like, the same ID can be used as long as the information of the content is the same. In other words, even when the contents with different optimum bit rates or different image sizes are respectively recorded in the mobile terminal 100 and the stationary TV 200, the two contents has the same ID. Accordingly, by specifying a period to be viewed/listened to by use of one of the audio visual devices, a user can view/listen to the specified period on the other audio visual device.

In addition, even when different contents coincidentally have the same file name, the different contents can be distinguished. Thus, the content-specific ID is also advantageous for content search.

### <Embodiment 5>

As shown in Fig. 6, according to this embodiment, an audio visual device 200 is connected to a home network 300, and is also connected to the Internet 350 via a router 500. In addition, an audio visual device 250 at another home is connected to a home network 302, and is also connected to the Internet 350 via a router 501. In order to notify a second user of the first user's favorite period of a certain content, a user using the audio visual device 200 transmits viewing/listening period information to the audio visual device 250 by attaching the information to an email, for example, in order to notify a different user of a period of a certain content that the user of the audio visual device 200 likes. In this way, the user using the audio visual device 250 can easily view/listen to a recommended period of the content that the other user likes.

When the content specified by the audio visual device 200 does not exist in the audio visual device 250, the audio visual device 250 can easily obtain the desired content by searching the Internet, as described above.

In addition, when the above content is a content encoded with MP3, AAC or the like, the user can listen to only a part, which is difficult to listen to with the acoustic characteristics of the mobile terminal 100, by using the stationary TV 200. Additionally, by using the stationary TV 200, the user also can listen to only a part desired to listen to on multiple channels such as 5.1ch on which reproduction is difficult by using the mobile terminal 100.

Moreover, when the above content is an image content encoded with H.263, MPEG-4, H.264 or the like, the user can view only a part difficult to view on the small display of the mobile terminal 100, by using the big screen of the stationary TV 200. Incidentally, the above content may be a multiplexed content including not only an image but also musical sound encoded with MP3, AAC or the like

### Industrial Applicability

The present invention is applicable to a content viewing/listening system.

## Claims

1. An audio visual device **characterized by** comprising:
a content outputting unit for outputting a content;
an inputting unit; and
a viewing/listening period information transmitting unit for outputting, to a different audio visual device, viewing/listening period information on a viewing/listening period of the content inputted by the inputting unit.

2. An audio visual device **characterized by** comprising:
a content outputting unit for outputting a content;
a viewing/listening period information receiving unit for receiving viewing/listening period information transmitted from a different audio visual device; and
a controller for performing a control to output a content for only a period specified by the received viewing/listening period information.

3. The audio visual device according to any one of claims 1 and 2, **characterized in that**
the viewing/listening period information includes a plurality of periods set for each content, and
the content corresponding to any one of or all of the plurality of set periods is outputted.

4. The audio visual device according to any one of claims 1 to 3, further comprising:
a function of communicating with another audio visual device,
**characterized in that** when the content, which is specified by content information included in the viewing/listening period information, does not exist in the audio visual device, the audio visual device requests a transfer of the content from an audio visual device form which the viewing/listening period information has been transmitted.

5. The audio visual device according to any one of claims 1 to 3, **characterized in that**
when the content, which is specified by content information included in the viewing/listening period information, does not exist in the audio visual device, the audio visual device searches for a recording device holding the content, and
when the recording device holding the content is found, the audio visual device requests a transfer of the content.

6. The audio visual device according to any one of claims 1 to 3, further comprising a function of communicating through the Internet, **characterized in that**
when the content, which is specified by content information included in the viewing/listening period information, does not exist in the audio visual device, the audio visual device searches the Internet for the content, and
when the desired content is found, the audio visual device requests a transfer of the content.

7. The audio visual device according to any one of claims 1 to 6, **characterized in that**
the content information included in the viewing/listening period information is identification information for identifying the content, and
the audio visual device outputs a specified period of a file identified according to the identification information.

8. The audio visual device according to claim 7, **characterized in that** the identification information is any one of a file name of a content and an ID specific to the content.

9. The audio visual device according to any one of claims 1 to 8, **characterized in that** the audio visual device is capable of performing a control to transmit/receive the viewing/listening period information to/from a different audio visual device through the Internet.

10. The audio visual device according to any one of claims 1 to 9, **characterized in that** musical sound is recorded in the content.

11. The audio visual device according to any one of claims 1 to 9, **characterized in that** a moving image is recorded in the content.

12. A content process method, comprising the steps of:
transmitting a content from first content recording and reproducing device to second content recording and reproducing device;
inputting viewing/listening period information including a start position and an end position of a period of the content desired to be viewed/listened to again during the viewing/listening of the content on the second content recording and reproducing device;
transmitting the viewing/listening period information to the first content recording and reproducing device;
reproducing the content on the first content recording and reproducing device, according to the viewing/listening period information.
